# EUROPEAN PATENT SPECIFICATION

(11) **EP 1 492 644 B1**
(45) Date of publication and mention of the grant of the patent: **11.11.2009**
(21) Application number: 02728031.2
(22) Date of filing: 08.04.2002
(51) Int. Cl.: B23Q 39/02, F16D 11/14, B23Q 16/02

(54) **DRIVING SYSTEM FOR ROTARY TOOLS IN A TOOL HOLDER TURRET**
ANTRIEBSSYSTEM FÜR WERKZEUGREVOLVER MIT ROTIERENDEN WERKZEUGEN
SYSTEME D'ENTRAINEMENT POUR OUTILS ROTATIFS DANS UNE TOURELLE REVOLVER PORTE-OUTIL

(43) Date of publication of application: 05.01.2005
(73) Proprietor: DUPLOMATIC AUTOMAZIONE S.P.A., 20025 Legnano (MI) (IT)
(72) Inventor: DE BERNARDI, Franco, I-21052 Busto Arsizio (IT)
(74) Representative: Cattaneo, Elisabetta
(86) International application number: PCT/IT2002/000219
(87) International publication number: WO 2003/084714

(56) References cited:
- EP-A- 0 302 998
- EP-A- 0 455 286
- GB-A- 2 135 619
- US-A- 4 799 410
- US-A- 4 949 443

## Description

### TECHNOLOGICAL BACKGROUND

The present invention refers to a driving system for rotary tools in a tool holder turret, for lathes, machining centres and the like.

### PRIOR ART

As is known, lathes and particularly machining centres must be able to carry out a high number of different types of processing to be carried out not just with cutting tools of the fixed type but also with tools of the rotary type, that is suitable for carrying out, on a workpiece, drilling, boring and suchlike operations.

The table for holding the rotary tools of the turret, possibly to replace a table equipped with housings for fixed tools, must therefore be equipped with housings provided with spindles capable of receiving and holding tools of the rotary type.

Moreover, it must be provided with driving members for putting the spindle into rotation whose tool, at certain times, is required to start moving in order to carry out the foreseen operation.

Examples of tables with rotary tool holders for turrets having the general features indicated above are shown in GB-A-2.126.134 and also in SU-A-1196155.

In both of the aforementioned cases of the prior art, the transmission of the motion, to make the tools rotate in the respective rotatable tool holders, comprises a series of gears, having a relatively small diameter, which connect the motor to the drive shaft for the tool holder spindle, arranged on multiple planes transversal to the rotational axis of the table, axially separated from each other.

Such a known structure, although having the advantage of robustness and cost-effectiveness associated with the use of gears with a small diameter, have, however, the drawback of the substantial axial size required by the complex kinematic members.

It is also known, for example from Italian utility model No. 189.444, filed on 11 February 1982 and published on 11 August 1984, as well as from document EP 0.302.998 A1 and EP0455286, to carry out the transmission of the rotational motion from the motor to the drive shaft for the rotatable tools through a single toothed crown coaxial with the axis of the rotatable table of the turret. EP 0455286 represents the basis for the preamble of claim 1 and discloses furthermore a coupling device for the transmission of the movement to rotatable toolholder units mounted on automatic turrets with coupling means adapted for performing axially translatory movement for engagement with the rotatable toolholder unit. The coupling means are furthermore adapted for revolving about their own axis under the action of means for generating and transmitting the movement, in this manner causing coupling of the transmission of the movement to the sole tool disposed in the working position, with the turret blocked and with rotation axes of the toolholder unit and of the coupling means coinciding in a position of alignment.

These last technical solutions, whilst on the one hand they have the advantage of taking up a small amount of space axially, on the other hand have the serious drawback of requiring expensive mechanical operations to prepare a toothed crown, with a relatively large diameter, capable of bearing the stresses deriving from the forces acting upon the tools which are actuated as well as the drawback of requiring a complex assembly system of the toothed crown so as to avoid this solution, during operation, from undergoing strains which would compromise the precision of the machining operations to be carried out with the turret. GB 2135619 discloses a turret for a machine tool with an indexable carrier which has a plurality of angularly equally spaced supporting devices, each of which having a locating bore for a tool. The supporting devices all comprise a drive wheel. A driving gear which is drivable from a driving motor is arranged in the same plane as the drive wheels of the supporting devices. The driving gear and the carrier with the drive wheels are rotatably mounted in a housing body. The drive wheels are driven by a flexible drive member surrounding the drive wheels and the axis of the indexable carrier. Accordingly, several drive wheels are always driven simultaneously. Furthermore, the relatively long flexible drive member is required to adapt its position according to the index position and eventually affords length compensation.

Moreover, all of the aforementioned technical solutions have the drawback of not easily allowing the realisation of the rotary tool holder table in modular form such as to be able to be easily applied to conventional turrets with the simple replacement of the existing tool holder table.

### DISCLOSURE OF THE INVENTION

The purpose of the present invention is that of solving the problem of the transmission of motion from the motor to the drive shaft for the rotary tools, in a tool holder table for turrets of the type indicated in the preamble, with a kinematic solution which allows the structural and economic drawbacks encountered in known technical solutions to be eliminated, without compromising the precision and the reliability of the turret.

The purpose is achieved with the driving system for tools according to the invention in accordance with claim 1 which will follow.

### BRIEF DESCRIPTION OF THE DRAWINGS

The invention shall now be described in greater detail with reference to practical embodiments, given for indicating and not limiting purposes, illustrated in the attached drawings in which:

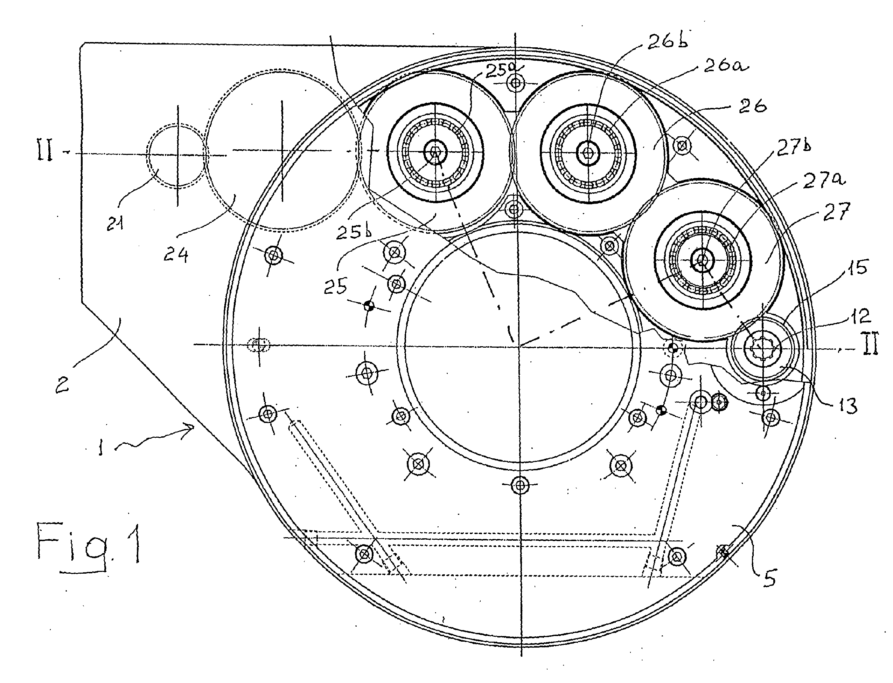

- figure 1 shows a front partial section view of the driving system according to the invention, in accordance with a first embodiment thereof, made transversally to the rotational axis of the table;

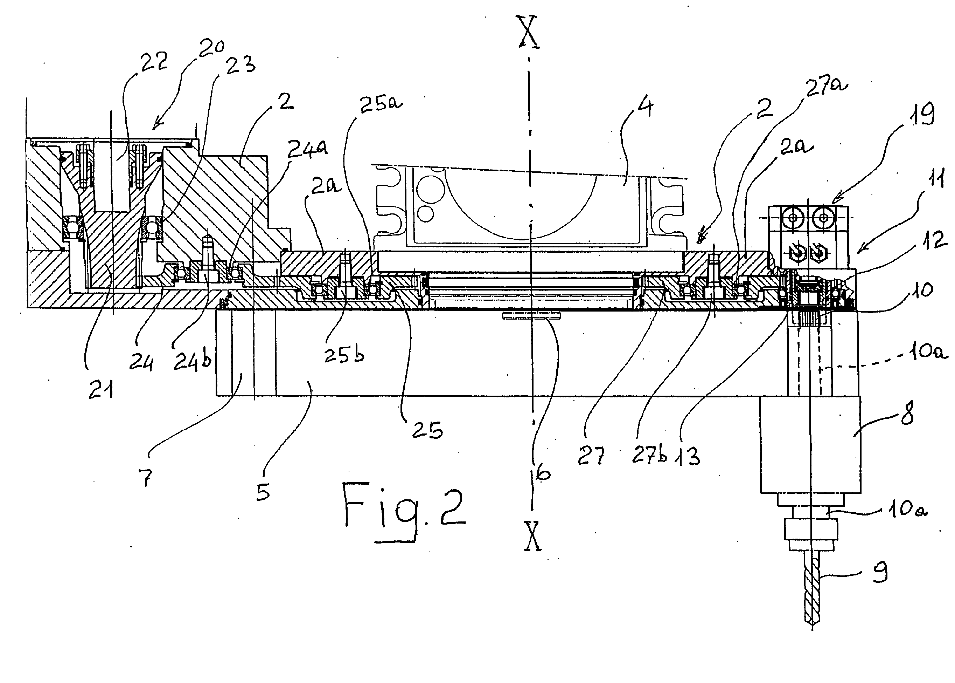

- figure 2 shows a section view of the tool holder table and of the driving system made along the line II-I of figure 1;

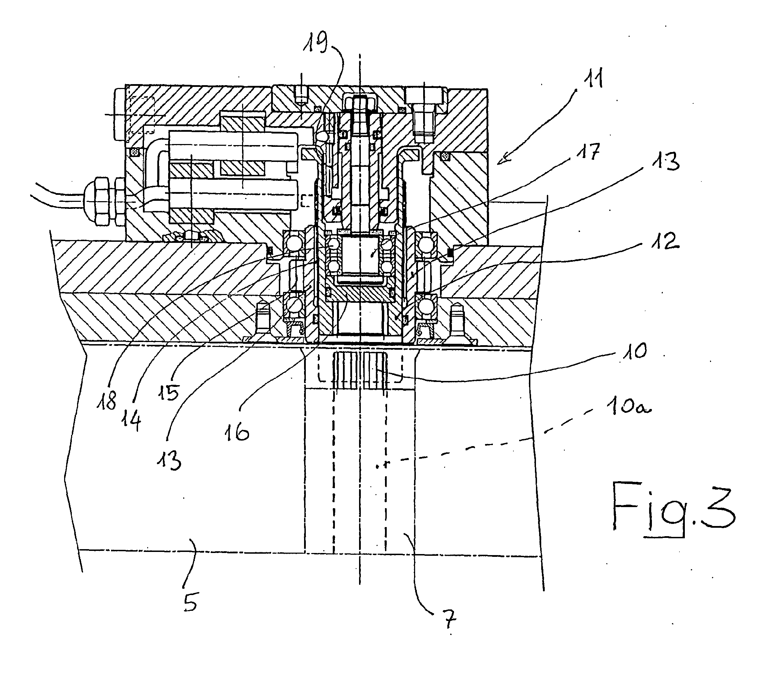

- figure 3 shows an enlarged section view of a part of figure 2;
- figure 4 shows a front partial section view of the driving system according to the invention in an alternative embodiment thereof, made transversally to the rotational axis of the table;
- figure 5 shows a section view of the tool holder table and of the driving system made along the line V-V of figure 4;
- figure 6 shows a partial section view of the table and of the driving system of figure 5.

### DETAILED DESCRIPTION OF THE PREFERRED EMBODIMENTS

With reference to the aforementioned figures, a tool holder table has been wholly indicated with 1, in particular a table for holding rotary drilling and boring tools.

The stationary part of the table consists of a body 2 equipped with a cavity 3 which extends around a longitudinal axis X-X; the body 2 is intended to be connected to the fixed part 4 of a conventional turret partially indicated in the drawings.

The rotatable part of the table, is instead indicated with 5; it is connected to the rotatable part of the turret, represented by the shaft 6, the axis of which coincides with the axis X-X about which the angular displacements for changing the working station of the tools take place in a conventional manner.

On the rotatable part 5, in a circumferential zone, housings 7 for the spindles 8 are formed in which the rotary tools like the one indicated with 9 in the drawings are fixed.

Of these conventional spindles 8, the tang of their respective motion receiving shaft 10a has been indicated with 10.

Then stationary body 2 is equipped with an activation station of the tools wholly indicated with 11 in which a sleeve 12 which is grooved on its inner surface is mounted.

Said sleeve 12 is mounted so that it can slide axially inside a bush 13 to which it is connected for rotation through a grooved coupling indicated with 14.

The bush 13 which makes up the drive shaft of the spindles 8 is equipped, on the outside, with a coaxial sprocket 15 integral with it.

The sleeve 12 is axially enveloped on the end 16 of a piston member 17 with the interposition of bearings 18.

The piston member 17, actuated in a conventional manner by a hydraulic system schematically indicated with 19, determines, upon command, the displacement of the sleeve 12 to ensure that it engages with the tang 10 of the motion receiving shaft 10a when the tool 9, at a given moment being in front of the activation station 11, needs to be made to rotate.

Vice-versa, at the end of a machining operation, the piston member 17, moving backwards, determines the detachment of the sleeve 12 from the tang 10. Following this the table 5 can be angularly displaced so that another spindle 8 with a different tool 9 is brought before the activation station 11.

For their coupling and detachment, both the motion receiving shaft 10a of each tool holder and the sleeve 12 have respective axes, not just parallel to the rotational axis X-X of the table 5 and thus of the turret in general, but also positioned on the respective supports so as to be axially aligned with each other when they are opposite one another and the turret is locked in the machining position.

The body 2 comprises a motor housing 20 in which a pinion 21 is housed with a hollow axial part 22 intended for receiving the shaft of a non-illustrated electric motor in a conventional manner.

The pinion 21 is supported by a bearing 23 and interlocks with the toothing of a gear 24 which constitutes the first element of a series of kinematic members for transferring the rotational motion from the pinion 21 to the bush 13, which constitutes the drive shaft, so as to be able to transfer it from this to the tool 9 mounted on the spindle.

The kinematic chain which constitutes the driving system for the present invention, in a first embodiment thereof, moreover comprises the gears 25, 26, 27, all engaging with each other in correspondence with their toothed outer part.

The gear 27 is, in turn, engaged with the sprocket 15 of the bush 13 of the activation station 11 for the tools.

All of the sprockets made up of the gears 24, 25, 26, 27 are housed in the cavity 3 of the stationary body 2 of the tool holder table and are supported by respective bearings 24a, 25a, 26a and 27a fixed with respective screws 24b, 25b, 26b and 27b to the side wall 2a of the body 2 with a substantially coplanar arrangement.

Such a coplanar arrangement allows the cavity 3 of the body 2 to be kept very flat thus allowing a somewhat reduced axial size of the tool holder table to be obtained.

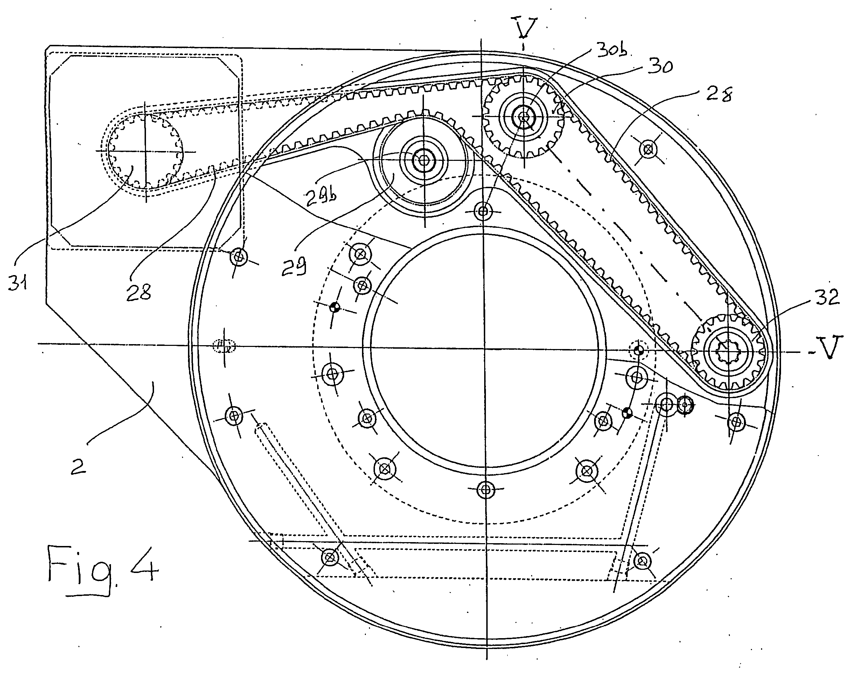

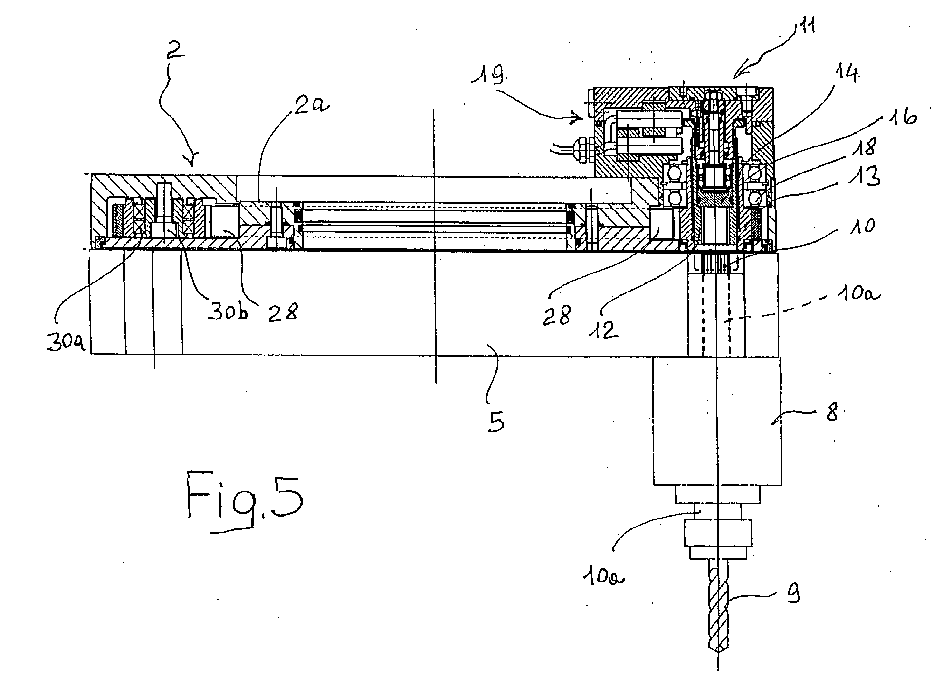

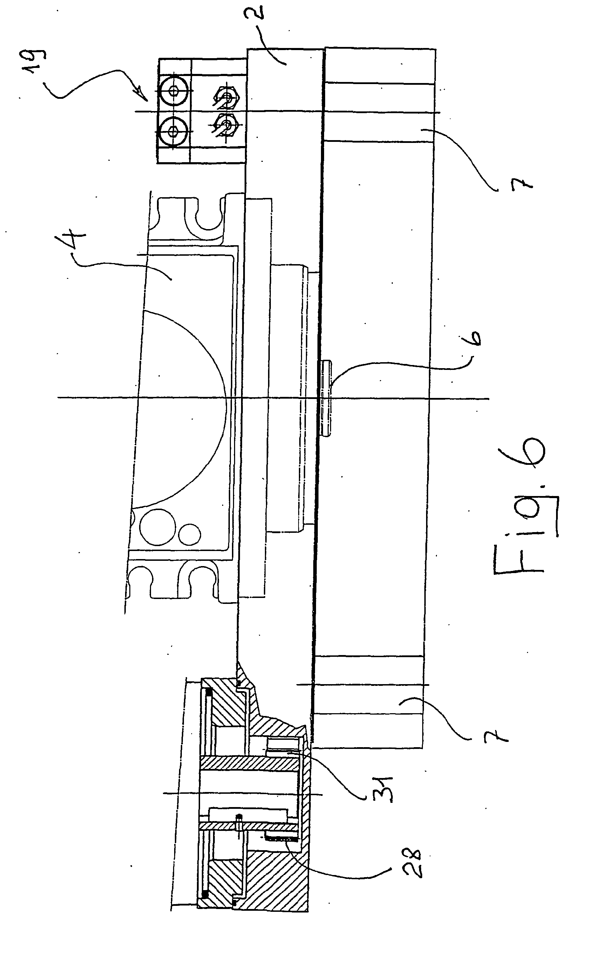

In accordance with the embodiment illustrated in figures 4, 5 and 6, it should be noted that the series of gears 24, 25, 26 and 27 has been replaced by a kinematic transmission comprising a toothed belt 28 and the transmission sprockets 29 and 30 fixed to the wall 2a of the body 2 through the bearings 29a, 30a, and respective screws 29b and 30b.

The arrangement of the sprockets 29 and 30 as well as of the belt 28 which connects them is substantially coplanar with the same advantage of a reduction in the axial size already indicated in reference to the embodiment described previously.

In accordance with the embodiment of figures 4, 5 and 6, the pinion of the motor housing is replaced by a wheel 31 with a toothing for a belt and thus also the gear of the activation station of the tools integral with the bush 13, is replaced with a sprocket for a toothed belt.

From that which has been described and illustrated in the drawings it can be noted that, in both embodiments of the driving system according to the invention, some of the intermediate kinematic members for the transmission of motion have their rotational axis positioned at a predetermined radial distance from the centre of rotation of the table 5 which is sufficient so that the kinematic chain of the transmission of motion does not cross the rotational axis X-X.

Moreover, it is clear that, once the spindle with the desired tool 9 is positioned opposite the activation station 11 of the rotation of the tool, through a conventional angular displacement operation of the turret and therefore of the rotatable part 5 of the table, the rotational motion is transferred to the spindle and from here to the tool 9 through a kinematic chain consisting of members of a smaller size which do not require special machining operations, which are supported in their operative functions through support members consisting of conventional bearings, which are also therefore not very expensive, providing a technical solution which is cost-effective and at the same time highly precise and reliable.

## Claims

1. Driving system for rotary tools, in tool holder turrets for lathes, machining centres and the like, of the type comprising a stationary base body (2) with a cavity (3) which extends around a longitudinal axis (X-X), a tool holder table (5) which is rotatable with respect to the stationary base body (2) about a rotational axis coaxial and coinciding with the longitudinal axis (X-X) of said cavity (3), a plurality of tool housings (7) formed on said table (5) and distributed along a circumferential zone of the table, each of said housings (7) being equipped with a respective spindle (8) for holding a rotary tool (9) comprising a motion receiving shaft (10a) arranged parallel to said rotational axis (X-X) of the table, a drive shaft (13) for the rotation of the tools rotatably mounted on said stationary base body (2) with its rotational axis also parallel to said rotational axis (X-X) of the table, motor members (6) for angularly displacing the table (5) about said rotational axis (X-X) to take the motion receiving shaft (10a) of one of any of said tool holder spindles (8) in axial alignment with said drive shaft (13), means (12) capable of being displaced upon command, housed on said stationary body (2), for coupling and decoupling said drive shaft (13) with the motion receiving shaft (10a) of the tool holder spindle which, following the rotation of the table, is aligned with it, driving means (20, 21), mounted on said stationary base body (2) to force into rotation said drive shaft (13) for rotating the tools, said driving means comprising a drive shaft (21) with its axis parallel to the rotational axis (X-X) of the table (5) and motion transmission kinematic members (24, 25, 26, 27, 28, 29, 30, 31, 32), interposed between said shaft (21) of the driving means and said drive shaft for the tools (13), positioned on the same plane, said plane being transversal to the rotational axis (X-X) of the table (5), the rotational axes of said kinematic members being parallel to said rotational axis of the table, and **characterised in that** the rotational axes of all the motion transmission kinematic members are positioned at a predetermined radial distance from the centre of rotation of the rotatable table (5) which is sufficient so that the motion transmission kinematic chain does not cross the rotational axis X-X.

2. Driving system according to claim 1 **characterised in that** said motion transmission kinematic members comprise a plurality of sprockets (24, 25, 26, 27), engaged with each other in correspondence with their toothed outer parts.

3. Driving system according to claim 1 **characterised in that** said motion transmission kinematic members comprise wheels (29, 30, 31, 32) connected to each other through a belt (28).

4. Driving means according to claim 3, **characterised in that** said wheels (29, 30, 31, 32) and said belt (28) are of the toothed type.

## Patentansprüche

1. Antriebssystem für rotierende Werkzeuge, in Werkzeugrevolvern für Bearbeitungsmaschinen, Maschinenzentren und Ähnlichem, des Typs, der aufweist, einen festen Grundkörper (2) mit einer Aussparung (3), die entlang der Längsachse (X-X) verläuft, einen Werkzeugmaschinentisch (5), der bezüglich des festen Grundköpers (2) um eine Rotationsachse koaxial rotierbar ist und die mit der Längsachse (X-X) der Aussparung (3) zusammenfällt, eine Vielzahl an Werkzeuggehäusen (7), die auf dem Tisch (5) ausgebildet sind und entlang eines Umfangsbereichs des Tisches angeordnet sind, wobei jedes der Gehäuse (7) mit einer entsprechenden Spindel (8) zur Aufnahme eines rotierenden Werkzeugs (9) ausgestattet ist, eine Bewegungsaufnahmewelle (10a) aufweisend, die parallel zur Rotationsachse (X-X) des Tisches angeordnet ist, eine Antriebswelle (13) für die Rotation der Werkzeuge, die rotierbar auf dem feststehenden Grundkörper (2) angebracht sind, wobei die Rotationsachse auch parallel zur Rotationsachse (X-X) des Tisches verläuft, Motorelemente (6) zum winkeligen Versetzen des Tisches (5) um die Rotationsachse (X-X), um die Bewegungsaufnahmewelle (10a) einer beliebigen der Werkzeugspindeln (8) in axialer Ausrichtung mit der Antriebswelle (13) zu setzen, Mittel (12), die auf Befehl versetzt werden können, angeordnet auf dem feststehenden Körper (2), zum Koppeln und Entkoppeln der Antriebswelle (13) mit der Bewegungsaufnahmewelle (10a) der Werkzeugspindel, die, der Rotation des Tisches folgend, damit ausgerichtet ist; Antriebsmittel (20, 21), die auf dem feststehenden Grundkörper (2) angebracht sind, um die Antriebswelle (13) zum Rotieren der Werkzeuge in Rotation zu bringen, wobei die Antriebsmittel eine Antriebswelle (21) umfassen, deren Achse parallel zur Rotationsachse (X-X) des Tisches (5) verläuft und kinematische Elemente (24, 25, 26, 27, 28, 29, 30, 31, 32) zur Bewegungsübertragung, die zwischen der Welle (21) der Antriebsmittel und der Antriebswelle für die Werkzeuge (13) angeordnet und auf derselben Ebene positioniert sind, wobei die Ebene schräg zur Rotationsachse (X-X) des Tisches (5) verläuft, wobei die Rotationsachsen der kinematischen Elemente parallel zur Rotationsachse des Tisches verlaufen, und **dadurch gekennzeichnet sind, dass** die Rotationsachsen aller kinematischer Elemente zur Bewegungsübertragung in einem bestimmten radialen Abstand vom Rotationszentrum des rotierbaren Tisches (5) angeordnet sind, der ausreichend ist, damit die Kette der kinematischen Bewegungsübertragung nicht die Rotationsachse X-X kreuzt.

2. Antriebssystem gemäß Anspruch 1, **dadurch gekennzeichnet, dass** die kinematischen Elemente zur Bewegungsübertragung eine Vielzahl an Kettenrädern (24, 25, 26, 27) umfasst, die entsprechend ihrer gezahnten Außenteile ineinander eingreifen.

3. Antriebssystem gemäß Anspruch 1, **dadurch gekennzeichnet, dass** die kinematischen Elemente zur Bewegungsübertragung Räder (29, 30, 31, 32) umfassen, die miteinander durch einen Riemen (28) verbunden sind.

4. Antriebsmittel gemäß Anspruch 3, **dadurch gekennzeichnet, dass** die Räder (29, 30, 31, 32) und der Riemen (28) gezahnt sind.

## Revendications

1. Système d'entraînement pour outil rotatif dans une tourelle revolver porte outil pour tours automatiques, unités mécaniques et similaires, du type comportant une base stationnaire (2) avec un orifice (3) s'étendant autour d'un axe longitudinal (X-X), une table porte outil (5) en rotation par rapport à la base stationnaire (2) autour d'un axe de rotation coaxial et coïncidant avec l'axe longitudinal (X-X) de ladite cavité (3), une série de logement pour outils (7) ménagés sur ladite table (5) et distribués sur une zone circonférentielle de la table, chacun desdits logements (7) étant pourvus d'une broche (8) pour recevoir un outil rotatif (9) comportant un axe de transmission (10a) disposé parallèlement audit axe de rotation (X-X) de la table, un arbre moteur (13) pour la rotation des outils montés en rotation sur ladite base stationnaire (2), avec son axe de rotation également parallèle audit axe de rotation (X-X) de la table, des éléments de moteur (6) pour le déplacement angulaire de la table (5) autour dudit axe de rotation (X-X) pour prélever l'axe de transmission (10a) de l'une quelconque desdites broches porte outils (8) alignée axialement avec ledit arbre moteur (13), des moyens (12) prévus pour être déplacés sur commande, logés dans ledit corps stationnaire (2), pour l'accouplement et le désaccouplement dudit arbre moteur (13) avec l'arbre de transmission (10a) de la broche porte outil, qui en fonction de la rotation de la table est alignée avec elle, des moyens de commande (20, 21) montés sur ladite base stationnaire (2) pour provoquer la rotation dudit arbre moteur (13) pour mettre en rotation les outils, lesdits moyens de commande comportant un arbre moteur (21) d'axe parallèle à celui de l'axe rotatif (X-X) de la table (5) et des éléments de transmission cinématique (24, 25, 26, 27, 28, 29, 30, 31, 32) interposés entre ledit arbre (21) des moyens de commande et ledit arbre moteur des outils (13), disposés sur le même plan, ledit plan étant transversal à l'axe de rotation (X-X) de la table (5), les axes de rotation desdits éléments cinématiques étant parallèles audit axe de rotation de la table, ,et **caractérisé en ce que** les axes de rotations de tous les éléments de transmission cinématique sont disposés à une distance radiale prédéterminée du centre de rotation de la table rotative (5), suffisante pour que la chaîne de transmission cinématique ne croise pas l'axe de rotation (X-X).

2. Système d'entraînement selon la revendication 1, **caractérisé en ce que** lesdits éléments de transmission cinématique comportent une série de pignons (24, 25, 26, 27) engagés les uns avec les autres par leurs parties externes dentées.

3. Système d'entraînement selon la revendication 1, **caractérisé en ce que** lesdits éléments de transmission cinématique comportent des roues (29, 30, 31, 32) reliées les unes aux autres au travers d'un ruban (28).

4. Système d'entraînement selon la revendication 3, **caractérisé en que** lesdites roues (29, 30, 31, 32) et ledit ruban (28) sont dentés.
